# EUROPÄISCHE PATENTANMELDUNG

(11) **EP 2 184 592 A2**
(43) Veröffentlichungstag der Anmeldung: **12.05.2010**
(21) Anmeldenummer: 09172521.8
(22) Anmeldetag: 08.10.2009
(51) Int. Cl.: G01G 19/00, G01G 19/414

(54) **Verfahren und Vorrichtung zum Wiegen eines Gegenstands**

(30) Priorität: 16.10.2008 DE 102008051976
(71) Anmelder: Siemens Aktiengesellschaft, 80333 München (DE)
(72) Erfinder: Francke, Jürgen, 12524, Berlin (DE); Voss, Frank, 12623, Berlin (DE)

(57) **Zusammenfassung**

Die Erfindung betrifft ein Verfahren und eine Vorrichtung zum Wiegen eines Gegenstands, insbesondere einer Postsendung. Der zu wiegende Gegenstand wird zu einer Waage transportiert.

Diese Waage misst einen vom Gewicht des Gegenstands abhängenden Parameter und führt die Messung dieses Parameters innerhalb eines Zeitraums durch. Ein Beschleunigungssensor misst eine Störgröße, die auf den Wiegevorgang einwirkt und das Ergebnis der Gewichtsberechnung verfälschen könnte. Dieser Beschleunigungssensor misst die Störgröße mindestens einmal innerhalb des Zeitraums, in dem die Waage den Parameter misst. Eine Auswerteeinheit prüft, ob die Störgröße im Zeitraum mindestens einmal einen Wert annimmt, der oberhalb einer vorgegebenen Störgrößen-Schranke liegt. Dann, wenn mindestens ein Störgrößen-Wert oberhalb der Störgrößen-Schranke liegt, liefert die Auswerteeinheit das Ergebnis, dass das Gewicht in dem Zeitraum nicht korrekt ermittelt wurde. Ansonsten liefert sie unter Verwendung des Messergebnisses von der Waage als Ergebnis einen Wert für das Gewicht des Gegenstands.

## Beschreibung

Die Erfindung betrifft ein Verfahren und eine Vorrichtung zum Wiegen eines Gegenstands, insbesondere einer Postsendung.

Eine Sortieranlage soll einen vorgegebenen hohen Durchsatz von sortierten Postsendungen erreichen. Daher soll das Wiegen der Postsendungen wenig Zeit erfordern. Dies schließt aus, eine Postsendung bis zum vollständigen Stillstand abzustoppen, dann die ruhende Postsendung zu wiegen und danach weiter zu transportieren und zu sortieren.

In DE 10 2005 018 708 B4 werden ein Verfahren mit den Merkmalen des Oberbegriffs des Anspruchs 1 und eine Vorrichtung mit den Merkmalen des Oberbegriffs des Anspruchs 8 beschrieben. Eine Wägevorrichtung ist dazu ausgestaltet, das Gewicht einer Postsendung zu messen, und besitzt mehrere Wiegezellen mit je einem Lastaufnehmer. Eine Störgröße beeinflusst den Wiegevorgang und kann zu falschen Ergebnissen führen. Ein Beschleunigungssensor misst diese Störgröße. Eine Auswerteeinheit wertet die Signale von den Lastaufnehmern und vom Beschleunigungssensor aus. Die Auswerteeinheit rechnet aus den Signalen von den Lastaufnehmern die Signale vom Beschleunigungssensor und somit den Einfluss der Störgröße heraus und liefert dadurch einen korrigierten Messwert für das Gewicht.

In DE 19618503 A1 wird vorgeschlagen, das Gewicht und die Geometrie und/oder Lage von Stückgütern gemeinsam zu erfassen. Ein zu vermessener Gegenstand wird mittels eines Zulieferbandförderers zu einer Abtasteinrichtung transportiert und anschließend mittels eines Wägebandförderers zu einer Waage. Die Abtasteinrichtung liefert Messwerte, aus denen die Geometrie berechnet wird. Eine Wiegezelle wiegt den jeweiligen Gegenstand. Aus den Ergebnissen von der Waage und denen der Abtasteinrichtung wird das Gewicht berechnet.

In DE 19618504 C2 wird beschrieben, dass der zu wiegende Gegenstand während des Wiegens bewegt wird. Die Bewegung des Gegenstands kann einen Auftrieb bewirken, der das Wiegeergebnis verfälscht, welches durch Wiegen des bewegten Gegenstands erzielt wurde. Daher wird vorgeschlagen, die Wirkung des Auftriebs auf das Wiegeergebnis durch einen Korrekturwert zu kompensieren. Um diesen Korrekturwert zu bestimmen, wird neben der Geschwindigkeit noch die Geometrie des Gegenstands ermittelt und verwendet, denn diese Geometrie beeinflusst den Auftrieb.

In DE 10 2006 041 836 A1 werden die Messergebnisse einer Wiegezelle einer Synchronisierungseinheit zugeführt. Dadurch wird erreicht, dass aus mehreren einzelnen Messergebnissen ein genaueres Gesamtergebnis berechnet wird.

Beispielsweise beim Wiegen von Postsendungen steht wenig Zeit zur Verfügung, um das Gewicht einer zu verarbeitenden Postsendung zu messen. Andererseits soll kein falsches Gewicht geliefert werden. Daher liegt der Erfindung die Aufgabe zugrunde, ein Verfahren mit den Merkmalen des Oberbegriffs des Anspruchs 1 und eine Vorrichtung mit den Merkmalen des Oberbegriffs des Anspruchs 8 bereitzustellen, die auch bei großen und nicht vorhersehbaren Störgrößen kein falsches Ergebnis liefern und außerdem rasch ein Resultat liefern.

Die Aufgabe wird durch ein Verfahren mit den Merkmalen des Anspruchs 1 und eine Vorrichtung mit den Merkmalen des Anspruchs 8 gelöst. Vorteilhafte Ausgestaltungen sind in den Unteransprüchen angegeben.

Der zu wiegende Gegenstand wird zu einer Waage transportiert. Diese Waage misst einen vom Gewicht des Gegenstands abhängenden Parameter und führt die Messung dieses Parameters innerhalb eines Zeitraums durch. Ein Beschleunigungssensor misst diese Störgröße, die auf den Wiegevorgang einwirkt und das Ergebnis der Gewichtsberechnung verfälschen könnte. Dieser Beschleunigungssensor misst die Störgröße mindestens einmal, vorzugsweise mehrmals innerhalb des Zeitraums, in dem die Waage den Parameter misst.

Eine Auswerteeinheit führt folgende Schritte durch:
- Die Auswerteeinheit prüft, ob die Störgröße im Zeitraum mindestens einmal einen Wert annimmt, der oberhalb einer vorgegebenen Störgrößen-Schranke liegt.
- Dann, wenn mindestens ein Störgrößen-Wert oberhalb der Störgrößen-Schranke liegt, liefert die Auswerteeinheit das Ergebnis, dass das Gewicht in dem Zeitraum nicht korrekt ermittelt wurde.
- Ansonsten liefert die Auswerteeinheit unter Verwendung des Messergebnisses von der Waage als Ergebnis einen Wert für das Gewicht des Gegenstands.

Im Folgenden wird die Erfindung anhand eines Ausführungsbeispiels beschrieben. Dabei zeigen:
- Fig. 1: anhand eines Flussdiagramms eine Ausgestaltung, bei der der Gewichtsberechner und der Komparator unabhängig voneinander arbeiten;
- Fig. 2: eine Abwandlung der Ausgestaltung von Fig. 1, bei der zuerst der Komparator und dann der Gewichtsberechner arbeiten.

Im Ausführungsbeispiel werden Postsendungen gewogen. Die Postsendungen werden aufrecht stehend transportiert. Während des Transports werden die Postsendungen zeitweise zwischen zwei Endlos-Förderbändern eingeklemmt. Die beiden Förderbänder drehen sich mit gleicher Geschwindigkeit und transportieren dadurch die Postsendungen zu mindestens einer Waage. Die Waage weist einen Messwertaufnehmer und einen Lastaufnehmer auf, über den eine zu wiegende Postsendung geführt wird. Der Messwertaufnehmer und der Lastaufnehmer sind in ein Gehäuse mit Bodenplatte eingelassen.

Möglich ist, dass der Strom von Postsendungen auf mehrere Ströme aufgeteilt wird und jeder Strom zu jeweils einer Waage transportiert wird. Ein derartiges Verfahren ist z. B. aus EP 881956 B1 bekannt.

Während des Wiegevorgangs bleibt jede Postsendung im Ausführungsbeispiel permanent in Bewegung. Sie wird über die mindestens eine Waage hinweg transportiert. Jede Waage wiegt die bewegte Postsendung.

Der Messwertaufnehmer der Waage ist mechanisch mit dem Lastaufnehmer verbunden und nimmt mehrere Messwerte eines Parameters auf, wobei der Parameter vom Gewicht der Postsendung abhängt. Beispielsweise misst der Messwertaufnehmer direkt die Gewichtskraft, welche die Postsendung auf den Lastaufnehmer ausübt. Oder die Postsendung verursacht, dass ein Lastaufnehmer der Waage nach unten ausgelenkt wird, und der Messwertaufnehmer misst die dergestalt bewirkte Auslenkung.

Der Wiegevorgang kann von einer Störgröße verfälscht werden. Die Störgröße ist in der Regel zeitlich veränderlich. Beispielsweise verursachen ein vorbeifahrendes Fahrzeug oder Bauarbeiten in der Nähe oder auch ein Naturereignis Erschütterungen. Die Störgröße kann periodisch oder nicht-periodisch variieren.

Der Messwertaufnehmer führt die Messungen an einer Postsendung innerhalb jeweils eines Zeitraums ZR durch. Während dieses gesamten Zeitraums ZR misst ein Beschleunigungssensor mindestens einen physikalischen Parameter der Störgröße, der den Wiegevorgang beeinflusst. Beispielsweise misst der Beschleunigungssensor im Zeitraum ZR mehrere Messwerte für
- die Beschleunigung oder Verzögerung (negative Beschleunigung), die das Gehäuse mit der Bodenplatte der Waage aufgrund der Störgröße ausführt,
- eine Kraft, die die Störgröße auf das Gehäuse mit der Bodenplatte ausübt,
- eine Amplitude oder eine Frequenz des zeitlichen Verlaufs der Störgröße.

Vorzugsweise misst der Beschleunigungssensor den zeitlichen Verlauf des Störgrößen-Parameters durch Abtastung z. B. mit einer festen Abtastrate.

Der Beschleunigungssensor ist dazu ausgestaltet, die Störgröße zu messen. Das Gewicht einer Postsendung soll nicht die Messergebnisse des Beschleunigungssensors beeinflussen. Daher ist der Beschleunigungssensor vom Lastaufnehmer mechanisch entkoppelt. Die mindestens eine Störgröße wirkt sich auf die Waage aus. Daher ist der Beschleunigungssensor mit dem Gehäuse oder der Bodenplatte der Waage mechanisch verbunden und misst die auf das Gehäuse einwirkende Störgröße.

Möglich ist, dass der Parameter aus mehreren direkt gemessenen Größen berechnet wird. Möglich ist auch, dass mehrere Parameter der Störgröße gemessen werden.

Vorgegeben ist mindestens eine Störgrößen-Schranke, z. B. eine maximale Beschleunigung. Möglich ist, dass für verschiedene Parameter der Störgröße unterschiedliche Schranken vorgegeben sind, nämlich jeweils eine entsprechende Schranke für jeden Parameter.

Die Auswerteeinheit umfasst einen Komparator und einen Gewichtsberechner. Der Komparator vergleicht die Messwerte vom Beschleunigungssensor mit der mindestens einen Störgrößen-Schranke. Der Komparator
- erzeugt dann ein Störungs-Signal, wenn mindestens ein Messwert vom Beschleunigungssensor oberhalb der entsprechenden Störgrößen-Schranke liegt, und
- erzeugt ein Kein-Störungs-Signal oder erzeugt kein Störungs-Signal, wenn jeder Messwert unterhalb der entsprechenden Störgrößen-Schranke liegt

Der Gewichtsberechner berechnet zumindest dann, wenn der Komparator das Kein-Störungs-Signal liefert bzw. kein Störungs-Signal erzeugt hat, einen Wert für das Gewicht der Postsendung. Diesen Schritt führt der Gewichtsberechner auf eine der folgenden beiden Ausgestaltungen durch:
- In der ersten Ausgestaltung wird dann, wenn kein Störungs-Signal vorliegt, der Einfluss jeder Störgröße vernachlässigt. Der Gewichtsberechner berechnet den Wert für das Gewicht ausschließlich unter Verwendung der Werte vom Messwertaufnehmer der Waage.
- In der zweiten Ausgestaltung kompensiert der Gewichtsberechner den Einfluss mindestens einer Störgröße auf den Wiegevorgang. Die Messwerte vom Beschleunigungssensor werden an den Gewichtsberechner übermittelt. Der Gewichtsberechner berechnet einen nicht korrigierten Wert für das Gewicht unter Verwendung der Werte vom Messwertaufnehmer und korrigiert diesen Wert unter Verwendung von Werten des Beschleunigungssensors. Beispielsweise wendet der Gewichtsberechnet ein Verfahren an, das in DE 10 2005 018 708 B4 beschrieben ist.

Der Wert, den der Gewichtsberechner liefert, wird z. B. dazu verwendet, um zu überprüfen, ob ein ausreichendes Beförderungsentgelt für den Transport der Postsendung entrichtet wurde. Beispielsweise wird der Gewichtswert mit einem Abbild eines Freimachungsvermerks auf der Postsendung oder mit einem Eintrag in einer Datei über den Bezahlvorgang für den Transport verglichen. Möglich ist auch, dass der Transporteur dem Einlieferer - oder jeweiligem Empfänger - eine individuelle Rechnung für den Transport der Postsendung stellt, wobei der Rechnungsbetrag vom gemessenen Gewicht abhängt. Um für spätere Reklamationen gewappnet zu sein, wird der berechnete Gewichtswert - verbunden mit einem optischen Abbild der Postsendung und/oder einer auf der Postsendung angebrachten Kennung - manipulationssicher in einem Alibispeicher abgespeichert.

In einer Ausgestaltung wird der Gewichtswert an eine Maschinensteuerung übermittelt, und die Maschinensteuerung steuert weitere Bestandteile der Sortieranlage abhängig vom Gewichtswert an. Dadurch wird bewirkt, dass der weitere Transport und/oder die weitere Verarbeitung der Postsendung von ihrem Gewicht abhängen.

In dieser Ausgestaltung arbeitet der Gewichtsberechner unabhängig von dem Komparator und berechnet auf jeden Fall einen Gewichtswert - auch dann, wenn der Komparator das Störungs-Signal liefert. Diese Ausgestaltung hat den Vorteil, dass der Gewichtsberechner und der Komparator weniger exakt synchronisiert zu werden brauchen.

In dieser Ausgestaltung wird das Störungs-Signal direkt an die Maschinensteuerung übermittelt. Die Maschinensteuerung schleust die Postsendung daraufhin aus.

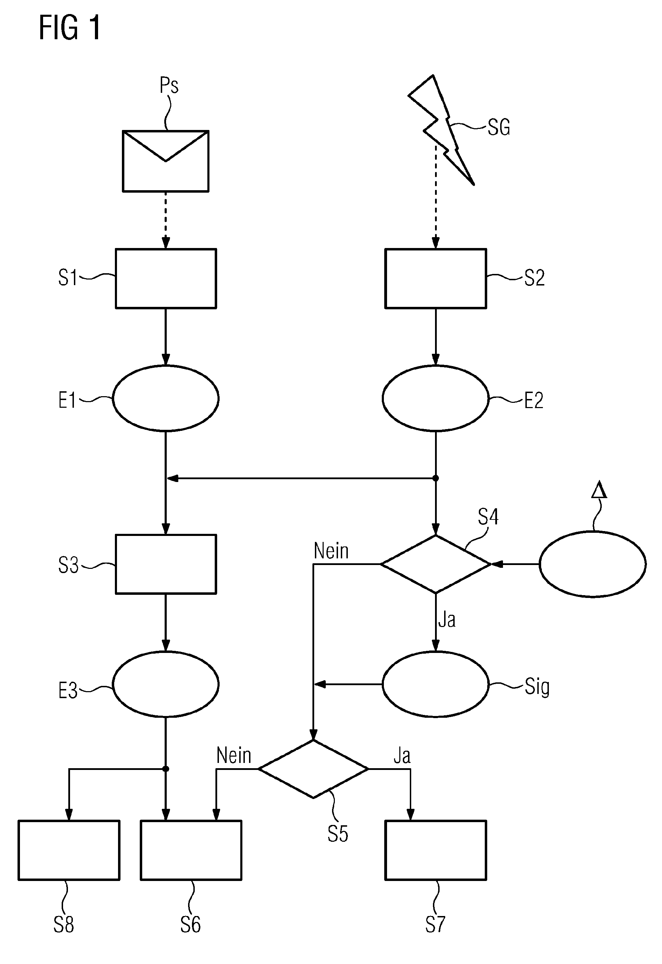

Fig. 1 zeigt diese Ausgestaltung. In einem Schritt E1 misst der Messwertaufnehmer den vom Gewicht der Postsendung Ps abhängenden Parameter und liefert als Ergebnis E1 den gemessenen Parameterwert. Der Beschleunigungssensor misst in einem Schritt E2 die Störgröße SG und liefert als Ergebnis E2 den gemessenen Störgrößenwert.

Der Gewichtsberechner berechnet in einem Schritt S3 als Ergebnis E3 einen Wert für das Gewicht der Postsendung. Hierfür verwendet der Gewichtsberechner den gemessenen Parameterwert E1 und den gemessenen Störgrößenwert E2. Der Komparator vergleicht in einem Schritt S4 den Störgrößenwert E2 mit der mindestens einen vorgegebenen Schranke Δ. Falls der Störgrößenwert E2 größer als die Schranke Δ ist, so erzeugt der Komparator das Störungs-Signal Sig, ansonsten nicht.

Die Maschinensteuerung entscheidet in einem Schritt S5, ob das Störungs-Signal Sig vorliegt. Falls nicht, so löst die Maschinensteuerung in einem Schritt S6 die weitere Verarbeitung der Postsendung aus, wofür die Maschinensteuerung den Gewichtswert E3 vom Gewichtsberechner verwendet. Falls das Störungs-Signal Sig vorliegt, so schleust die Maschinensteuerung in einem Schritt S7 die Postsendung aus.

In einer anderen Ausgestaltung übermittelt der Komparator sein Ergebnis an den Gewichtsberechner. Sobald der Gewichtsberechner das Störungs-Signal erhält, bricht er die Berechnung des Gewichts für die betreffende Postsendung ab, bricht also die Auswertung derjenigen Messwerte ab, die der Messwertaufnehmer in dem Zeitraum ZR gemessen hat. Denn diese Messwerte sind erheblich von der mindestens einen Störgröße überlagert. Falls das Störungs-Signal früh genug vorliegt, so beginnt der Gewichtsberechner die Berechnung erst gar nicht. Diese Ausgestaltung spart unnütze Rechenzeit ein, nämlich Rechenzeit, die der Gewichtsberechner sonst für eine Berechnung verwenden würde, deren Ergebnis dann verworfen werden würde.

Das Störungs-Signal wird auch in dieser Ausgestaltung zusätzlich an die Maschinensteuerung übermittelt. Die Maschinensteuerung schleust die Postsendung daraufhin aus.

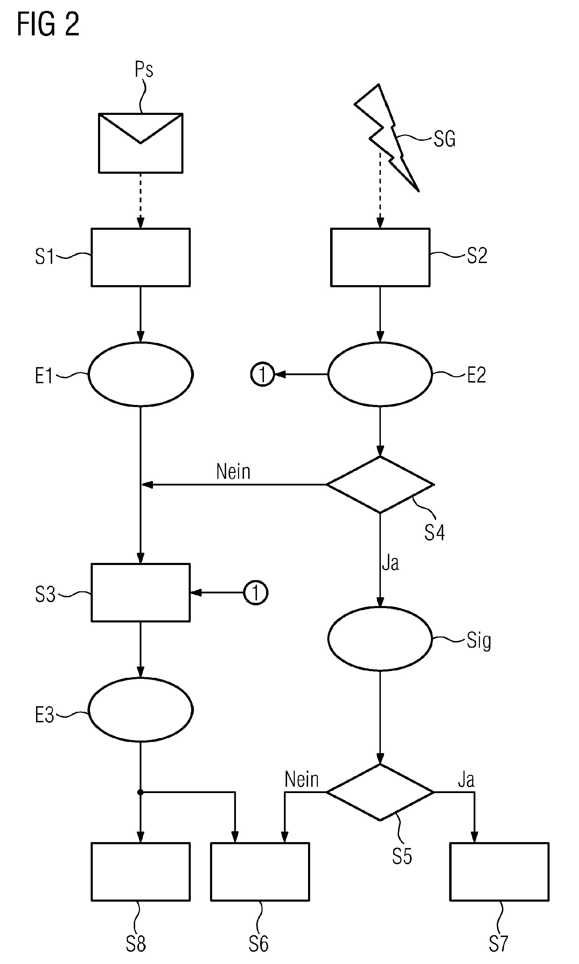

Fig. 2 veranschaulicht diese Abwandlung. Wie zu sehen ist, führt der Gewichtsberechner den Schritt S3 nur dann durch, wenn kein Störungs-Signal Sig vorliegt.

Falls das Störungs-Signal vorliegt, so liefert die Auswerteeinheit also das Ergebnis, dass das Gewicht der Postsendung nicht korrekt gemessen werden konnte.

Die in dem Zeitraum ZR vom Messwertaufnehmer der Waage gelieferten Werte sind nämlich bei Überschreitung der Schranke durch die Störgröße so stark verfälscht worden, dass eine Korrektur nicht durchgeführt wird. Trotz dieser Korrektur würden falsche Werte geliefert werden, oder die Berechnung des korrigierten Werts würde zu lange dauern.

Wie gerade dargelegt, schleust die Maschinensteuerung dann die betreffende Postsendung aus, wenn das Störungs-Signal vorliegt. In einer Ausführungsform wird die Postsendung manuell weiterverarbeitet.

In einer alternativen Ausführungsform wird die Postsendung, deren Gewicht nicht gemessen werden konnte, nach dem Ausschleusen zurücktransportiert und erneut der Waage zugeführt.

Die oben beschriebenen Schritte werden erneut durchgeführt, diesmal in einem weiteren Zeitraum ZR-1. Möglich ist, dass der mindestens eine Parameter der Störgröße im weiteren Zeitraum ZR-1 kleinere Werte annimmt, z. B. weil die Erschütterung abgeklungen ist.

**Bezugszeichenliste**

| *Bezugszeichen* | *Bedeutung* |
|---|---|
| Δ | Vorgegebene Schranke für den maximal zulässigen Wert der Störgröße SG |
| E1 | Wert des vom Gewicht der Postsendung Ps abhängenden Parameters, den die Waage misst |
| E2 | Störgrößen-Wert, den der Beschleunigungssensor misst |
| E3 | korrigierter Wert für das Gewicht der Postsendung Ps, den der Gewichtsberechner berechnet |
| PS | Postsendung, deren Gewicht gemessen wird |
| S1 | Schritt: Waage misst den Wert des vom Gewicht der Postsendung Ps abhängenden Parameters |
| S2 | Schritt: Beschleunigungssensor misst den Wert der Störgröße |
| S3 | Schritt: Gewichtsberechner berechnet den korrigierten Wert für das Gewicht der Postsendung Ps |
| S4 | Schritt: Komparator vergleicht den Störgrößen-Wert E2 mit der vorgegebenen Schranke Δ |
| S5 | Schritt: Maschinensteuerung prüft, ob das Störungs-Signal Sig anliegt |
| S6 | Schritt: Maschinensteuerung löst die weitere Verarbeitung der Postsendung Ps abhängig vom korrigierten Gewicht E3 der Postsendung Ps aus |
| S7 | Schritt: Maschinensteuerung schleust die Postsendung Ps aus, weil ihr Gewicht nicht gemessen werden konnte |
| S8 | Schritt: korrigiertes Gewicht E3 der Postsendung Ps wird im Alibispeicher abgespeichert |
| SG | Störgröße, die den Wiegevorgang beeinflusst |
| Sig | Störungs-Signal |

## Patentansprüche

1. Verfahren zum Wiegen eines Gegenstands,
wobei das Verfahren die Schritte umfasst, dass
- der Gegenstand zu einer Waage transportiert wird,
- die Waage einen vom Gewicht des Gegenstands abhängenden Parameter misst,
- ein Beschleunigungssensor eine auf den Wiegevorgang einwirkende Störgröße misst und
- eine Auswerteeinheit unter Verwendung der Messergebnisse von der Waage und vom Beschleunigungssensor ein Ergebnis liefert,
**dadurch gekennzeichnet, dass**
die Waage die Messung des Parameters innerhalb eines Zeitraums durchführt,
der Beschleunigungssensor die Störgröße im Zeitraum mindestens einmal misst und
die Auswerteeinheit
- prüft, ob die Störgröße im Zeitraum mindestens einmal einen Wert annimmt, der oberhalb einer vorgegebenen Störgrößen-Schranke liegt, und
- dann, wenn mindestens ein Störgrößen-Wert oberhalb der Störgrößen-Schranke liegt, das Ergebnis liefert, dass das Gewicht in dem Zeitraum nicht korrekt ermittelt wurde und
- ansonsten unter Verwendung des Messergebnisses von der Waage als Ergebnis einen Wert für das Gewicht des Gegenstands liefert.

2. Verfahren nach Anspruch 1,
**dadurch gekennzeichnet, dass**
dann, wenn jeder Störgrößen-Wert unterhalb der Störgrößen-Schranke liegt,
die Auswerteeinheit
- das Messergebnis, das die Waage im Zeitraum gemessen hat, unter Verwendung des Messergebnisses des Beschleunigungssensors korrigiert und
- als Ergebnis einen korrigierten Wert für das Gewicht des Gegenstands liefert.

3. Verfahren nach Anspruch 1 oder Anspruch 2,
**dadurch gekennzeichnet, dass**
der Beschleunigungssensor den zeitlichen Verlauf der Störgröße über den gesamten Zeitraum hinweg misst.

4. Verfahren nach einem der Ansprüche 1 bis 3,
**dadurch gekennzeichnet, dass**
der Gegenstand während des gesamten Wiege-Zeitraums weitertransportiert wird,
ohne gestoppt zu werden.

5. Verfahren nach einem der Ansprüche 1 bis 4,
**dadurch gekennzeichnet, dass**
dann, wenn die Auswerteeinheit festgestellt hat, dass mindestens ein gemessener Störgrößen-Wert oberhalb der Störgrößen-Schranke liegt,
die Auswerteeinheit die Berechnung des Werts für das Gegenstands-Gewicht abbricht.

6. Verfahren nach einem der Ansprüche 1 bis 4,
**dadurch gekennzeichnet, dass**
dann, wenn die Auswerteeinheit festgestellt hat, dass mindestens ein gemessener Störgrößen-Wert oberhalb der Störgrößen-Schranke liegt,
die Auswerteeinheit
- sowohl einen Wert für das Gegenstands-Gewicht
- als auch das Ergebnis, dass das Gewicht in dem Zeitraum nicht korrekt ermittelt wurde, liefert.

7. Verfahren nach einem der Ansprüche 1 bis 6,
**dadurch gekennzeichnet, dass**
dann, wenn die Auswerteeinheit das Ergebnis liefert, dass das Gewicht in dem Zeitraum nicht ermittelt wurde,
der Gegenstand erneut zur Waage transportiert wird,
in einem weiteren Zeitraum die Waage erneut den Parameter und der Beschleunigungssensor erneut mehrfach die Störgröße misst und
die Auswerteeinheit
- die Prüfung für den weiteren Zeitraum durchführt und
- dann, wenn alle Störgrößen-Werte, die im weiteren Zeitraum gemessen wurden, unterhalb der Störgrößen-Schranke liegen,
als Ergebnis einen Wert für das Gewicht unter Verwendung des Messergebnisses, das die Waage für den weiteren Zeitraum liefert, mit dem Messergebnis vom Beschleunigungssensor korrigiert und als Ergebnis ein Gewicht des Gegenstands liefert.

8. Vorrichtung zum Wiegen eines Gegenstands,
wobei
die Vorrichtung
- eine Zuführeinrichtung,
- eine Waage,
- einen Beschleunigungssensor und
- eine Auswerteeinheit
umfasst,
die Zuführeinrichtung dazu ausgestaltet ist, den Gegenstand zur Waage zu transportieren,
die Waage dazu ausgestaltet ist, einen vom Gewicht des Gegenstands abhängenden Parameter zu messen,
der Beschleunigungssensor dazu ausgestaltet ist, eine auf den Wiegevorgang einwirkende Störgröße zu messen, und
die Auswerteeinheit dazu ausgestaltet ist, unter Verwendung der Messergebnisse von der Waage und vom Beschleunigungssensor ein Ergebnis zu liefern,
**dadurch gekennzeichnet, dass**
die Waage dazu ausgestaltet ist, die Messung des Parameters innerhalb eines Zeitraums durchzuführen,
der Beschleunigungssensor dazu ausgestaltet ist, die Störgröße im Zeitraum mindestens einmal zu messen und
die Auswerteeinheit dazu ausgestaltet ist,
- zu prüfen, ob die Störgröße im Zeitraum mindestens einmal einen Wert annimmt, der oberhalb einer vorgegebenen Störgrößen-Schranke liegt, und
- dann, wenn mindestens ein Störgrößen-Wert oberhalb der Störgrößen-Schranke liegt, das Ergebnis zu liefern, dass das Gewicht in dem Zeitraum nicht korrekt ermittelt wurde und
- ansonsten unter Verwendung des Messergebnisses von der Waage als Ergebnis einen Wert für das Gewicht des Gegenstands zu liefern.

9. Vorrichtung nach Anspruch 8,
**dadurch gekennzeichnet, dass**
die Waage einen Lastaufnehmer und ein Gehäuse umfasst,
der Lastaufnehmer dazu ausgestaltet ist, den zu wiegenden Gegenstand zu tragen,
der Beschleunigungssensor vom Lastaufnehmer entkoppelt ist und
das Gehäuse und der Beschleunigungssensor dergestalt mechanisch miteinander gekoppelt sind,
dass der Beschleunigungssensor eine Beschleunigung des Gehäuses durch die Störgröße misst.

10. Verwendung einer Vorrichtung nach einem der Ansprüche 8 oder 9
zum Wiegen einer Postsendung.
